# FASCICULE DE BREVET EUROPEEN

(11) **EP 4 064 146 B1**
(45) Date de publication et mention de la délivrance du brevet: **04.10.2023**
(21) Numéro de dépôt: 22162463.8
(22) Date de dépôt: 16.03.2022
(51) Int. Cl.: G06Q 10/00, G06Q 50/06, H04L 12/66, H04W 40/10, H04W 40/12, H04W 40/22

(54) **COLLECTE AUTOMATISEE D'INDEX DE COMPTAGE DE COMPTEURS DE FLUIDE INTELLIGENTS**
AUTOMATISIERETE SAMMLUNG DES ZÄHLINDEXES VON INTELLIGENTEN STRÖMUNGSZÄHLERN
AUTOMATED COLLECT OF METERING INDEX OF INTELLIGENT FLUID METERS

(30) Priorité: 22.03.2021 FR 2102834
(43) Date de publication de la demande: 28.09.2022
(73) Titulaire: Sagemcom Energy & Telecom SAS, 92500 Rueil-Malmaison (FR)
(72) Inventeur: SABRAOUI, Abbas, 92500 RUEIL MALMAISON (FR); TEBOULLE, Henri, 92500 RUEIL MALMAISON (FR); ABID, Oussama, 92500 RUEIL MALMAISON (FR); LECOCQ, Guillaume, 92500 RUEIL MALMAISON (FR)
(74) Mandataire: Cabinet Le Guen Maillet

(56) Documents cités:
- US-A1- 2006 056 363
- LIANG WAN ET AL: "Demonstrability of Narrowband Internet of Things technology in advanced metering infrastructure", EURASIP JOURNAL ON WIRELESS COMMUNICATIONS AND NETWORKING, BIOMED CENTRAL LTD, LONDON, UK, vol. 2019, no. 1, 7 janvier 2019 (2019-01-07), pages 1-12, XP021270135, DOI: 10.1186/S13638-018-1323-Y
- Trong Nghia Le ET AL: "Advanced Metering Infrastructure Based on Smart Meters in Smart Grid" In: "Smart Metering Technology and Services - Inspirations for Energy Utilities", 29 juin 2016 (2016-06-29), InTech, XP055539180, ISBN: 978-953-51-2452-8 DOI: 10.5772/63631, * abrégé * * chapitre 3 *

## Description

### DOMAINE TECHNIQUE

La présente invention concerne des opérations de configuration de système de communication pour effectuer une collecte automatisée de relevés d'index de comptage de compteurs de fluide intelligents utilisant au moins un compteur de fluide intelligent comme relais pour au moins un autre compteur de fluide intelligent.

### ETAT DE LA TECHNIQUE ANTERIEURE

Il est connu des compteurs de fluide intelligents, de type compteurs à gaz, d'énergie thermique ou d'eau, qui comprennent des moyens des interfaces de communication radio permettant à un système de gestion automatisée d'effectuer une collecte à distance de relevés d'index de comptage des compteurs de fluide intelligents.

Par exemple, chacun de ces compteurs de fluide intelligents comporte une interface de communication compatible avec une technologie de réseau étendu à faible puissance LPWAN (« Low Power Wide Area Network » en anglais), par exemple selon la technologie LoRaWAN (« Long Range Wide Area Network » en anglais) ou NB-IoT (« NarrowBand Internet of Things » en anglais). Tous les compteurs de fluide intelligents transmettent alors par radio leurs relevés d'index de comptage en utilisant un réseau à longue portée radio géré par des passerelles qui assurent en outre une remontée de ces relevés d'index de comptage jusqu'à un système d'information les traitant de manière centralisée.

Contrairement aux compteurs électriques intelligents, ces compteurs de fluide intelligents ne sont pas alimentés par secteur. Ils disposent d'une batterie pour fonctionner et pour notamment permettre d'établir des communications radio afin de mettre en place la gestion automatisée à distance.

La publication de LIANG WAN intitulée « Demonstrability of Narrowbad Internet of things technology in advanced metering infrastucture » publiée dans "Eurasip journal on wireless communications and networking biomed central LTD" divulgue une passerelle et une pluralité de compteurs de fluide intelligents.

La publication de Trong Nghia intitulée « Advance metering infrastructure based on smart meters in smart grids » publiée dans « smart metering technology and services-Inpiration for energy utilities » divulgue une architecture de réseau de compteurs intelligents.

La demande de brevet US 2006056363 divulgue un système pour un noeud d'accès couplé à un ordinateur pour communiquer sans fil avec une pluralité de noeuds radio.

Il est donc souhaitable de fournir une solution qui soit énergétiquement efficace dans le cadre d'une gestion automatisée de compteurs de fluide intelligents alimentés sur batterie. Il est notamment souhaitable de fournir une solution qui soit simple et à faible coût. Il est aussi souhaitable de fournir une solution qui facilite l'installation et la maintenance de la gestion automatisée des compteurs de fluide intelligents.

### EXPOSE DE L'INVENTION

A cet effet, il est proposé un procédé de configuration de réseau de communication par une passerelle agissant comme intermédiaire entre une pluralité de compteurs de fluide intelligents et un système d'information en charge de collecter des relevés d'index de comptages effectués par lesdits compteurs de fluide intelligents, la passerelle étant connectée au système d'information par un premier réseau de communication, la passerelle étant reliée à des premiers compteurs de fluide intelligents parmi ladite pluralité grâce à un deuxième réseau de communication à longue portée radio, lesdits premiers compteurs de fluide intelligents pouvant agir comme relais pour des seconds compteurs de fluide intelligents grâce à un troisième réseau de communication à courte portée radio, dans lequel la passerelle effectue les étapes suivantes : obtenir, via le deuxième réseau de communication à longue portée radio, des niveaux de charge batterie des premiers compteurs de fluide intelligents ; sélectionner un ou plusieurs premiers compteurs de fluide intelligents comme relais, en fonction des niveaux de charge batterie obtenus, en favorisant les premiers compteurs de fluide intelligents dont le niveau de charge batterie est le plus haut ; configurer le deuxième réseau de communication à longue portée radio, en instruisant les premiers compteurs de fluide intelligents sélectionnés comme relais d'activer leur fonctionnalité de relais et en instruisant d'éventuels anciens relais qui n'ont pas été de nouveau sélectionnés comme relais de désactiver leur fonctionnalité de relais ; surveiller les niveaux de charge batterie des premiers compteurs de fluide intelligents et réévaluer la configuration du deuxième réseau de communication à longue portée radio en conséquence. Ainsi, il est possible d'étendre la portée du système de gestion automatisée tout en utilisant des relais s'appuyant sur un réseau de communication à plus courte portée (moins énergivore), tout en tenant compte du niveau de charge batterie de ces relais pour équilibrer la dépense énergétique.

Selon un mode de réalisation particulier, la passerelle sélectionne comme relais chaque premier compteur de fluide intelligent dont le niveau de charge batterie est supérieur à un premier seuil prédéterminé.

Selon un mode de réalisation particulier, dans lequel la passerelle effectue les étapes suivantes : effectuer, lors d'échanges avec les premiers compteurs de fluide intelligents via le deuxième réseau de communication à longue portée radio, des mesures de qualité de réception de signaux venant des premiers compteurs de fluide intelligents ; sélectionner un ou plusieurs premiers compteurs de fluide intelligents comme relais, en fonction en outre des mesures de qualité de réception de signaux effectuées, en favorisant les premiers compteurs de fluide intelligents pour lesquels la qualité de réception de signaux est la plus haute ; surveiller la qualité de réception de signaux transmis par les premiers compteurs de fluide intelligents dans le deuxième réseau de communication à longue portée radio, et réévaluer la configuration du deuxième réseau de communication à longue portée radio en conséquence.

Selon un mode de réalisation particulier, la passerelle sélectionne comme relais chaque premier compteur de fluide intelligent pour lequel la qualité de réception de signaux par la passerelle est supérieure à un second seuil prédéterminé.

Selon un mode de réalisation particulier, les seconds compteurs de fluide intelligents sont appairés avec les premiers compteurs de fluide intelligents agissant comme relais pour lesdits seconds compteurs de fluide intelligents, en effectuant les étapes suivantes : chaque second compteur de fluide intelligent, dans un mode d'appairage, envoie des trames d'annonce jusqu'à réception d'une réponse d'un premier compteur de fluide intelligent agissant comme relais ; chaque premier compteur de fluide intelligent agissant comme relais en mode d'appairage et à portée radio du troisième réseau de communication à courte portée radio, répond à au moins une trame d'annonce reçue et s'appaire avec le second compteur de fluide intelligent ayant émis la trame d'annonce répondue.

Selon un mode de réalisation particulier, au moins un dit second compteur de fluide intelligent bascule dans le mode d'appairage sur détection pour la toute première fois d'un déclenchement de comptage.

Selon un mode de réalisation particulier, au moins un dit second compteur de fluide intelligent bascule dans le mode d'appairage suite à une perte de synchronisation avec un relais précédent.

Selon un mode de réalisation particulier, un dit relais bascule en mode d'appairage sur détection d'un appui sur un bouton d'interface homme-machine du relais en question ou sur réception d'instructions spécifiques via un connecteur infrarouge du relais en question.

Selon un mode de réalisation particulier, la détection d'un appui sur le bouton d'interface pendant une durée comprise entre une borne minimum et une borne maximum instruit le relais en question de basculer en mode d'appairage de sorte à permettre à un unique second compteur de fluide intelligent de s'appairer et la détection d'un appui sur le bouton d'interface pendant une durée supérieure à la borne maximum instruit le relais en question de basculer en mode d'appairage pendant une durée prédéterminée.

Selon un mode de réalisation particulier, un dit relais bascule en mode d'appairage sur réception d'instructions de la passerelle d'activer ou de maintenir la fonctionnalité de relais.

Selon un mode de réalisation particulier, chaque relais collecte via le troisième réseau de communication à courte portée radio le niveau de charge batterie de chaque second compteur de fluide intelligent qui lui est appairé et en informe la passerelle, la passerelle alertant le système d'information lorsque le niveau de charge batterie d'un compteur de fluide intelligent est inférieur à un seuil prédéterminé d'alerte.

Selon un mode de réalisation particulier, lorsqu'un premier compteur de fluide intelligent qui agissait comme relais et qui ne l'est plus détecte qu'au moins un second compteur de fluide intelligent est isolé et n'est plus appairé, le premier compteur de fluide intelligent réactive automatiquement sa fonctionnalité de relais, permet à chaque second compteur de fluide intelligent en question d'effectuer un appairage et prévient la passerelle qu'il agit à nouveau comme relais.

Selon un mode de réalisation particulier, lorsqu'un relais perd sa connexion avec la passerelle via le deuxième réseau de communication à longue portée radio, le relais en question désactive automatiquement la fonctionnalité de relais, reprend son simple rôle de compteur de fluide intelligent, et cherche lui-même à être appairé avec un autre relais.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus dans l'un quelconque de leurs modes de réalisation, lorsque ledit programme est exécuté par le processeur. L'invention concerne également un support de stockage d'informations stockant un tel programme d'ordinateur.

Il est aussi proposé une passerelle configurée pour agir comme intermédiaire entre une pluralité de compteurs de fluide intelligents et un système d'information en charge de collecter des relevés d'index de comptages effectués par lesdits compteurs de fluide intelligents, la passerelle étant configurée pour être connectée au système d'information par un premier réseau de communication et pour être reliée à des premiers compteurs de fluide intelligents parmi ladite pluralité grâce à un deuxième réseau de communication à longue portée radio, lesdits premiers compteurs de fluide intelligents pouvant agir comme relais pour des seconds compteurs de fluide intelligents de ladite pluralité grâce à un troisième réseau de communication à courte portée radio, la passerelle comportant de la circuiterie électronique configurée pour : obtenir, via le deuxième réseau de communication à longue portée radio, des niveaux de charge batterie des premiers compteurs de fluide intelligents ; sélectionner un ou plusieurs premiers compteurs de fluide intelligents comme relais, en fonction des niveaux de charge batterie obtenus, en favorisant les premiers compteurs de fluide intelligents dont le niveau de charge batterie est le plus haut ; configurer le deuxième réseau de communication à longue portée radio, en instruisant les premiers compteurs de fluide intelligents sélectionnés comme relais d'activer leur fonctionnalité de relais et en instruisant d'éventuels anciens relais qui n'ont pas été de nouveau sélectionnés comme relais de désactiver leur fonctionnalité de relais ; surveiller les niveaux de charge batterie des premiers compteurs de fluide intelligents et réévaluer la configuration du deuxième réseau de communication à longue portée radio en conséquence.

Il est aussi proposé un système de gestion automatisée pour collecter des relevés d'index de comptages effectués par des compteurs de fluide intelligents dudit système, le système comportant en outre un système d'information et une passerelle telle qu'évoquée ci-dessus.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un système de gestion automatisée configuré pour réaliser une relève de comptage auprès de compteurs de fluide intelligents ;
[Fig. 2] illustre schématiquement un exemple d'architecture matérielle de dispositif du système de gestion automatisée ;
[Fig. 3] illustre schématiquement un algorithme, implémenté par une passerelle du système de gestion automatisée, de gestion de configuration d'un réseau de collecte ;
[Fig. 4] illustre schématiquement des échanges permettant d'appairer un compteur de fluide intelligent avec un relais dans le système de gestion automatisée ;
[Fig. 5] illustre schématiquement des échanges permettant à un relais de réaliser la relève de comptage auprès d'au moins un compteur de fluide intelligent appairé avec ledit relais ;
[Fig. 6] illustre schématiquement un algorithme, implémenté par la passerelle, de notification d'alerte à un système d'information du système de gestion automatisée ;
[Fig. 7] illustre schématiquement un algorithme, implémenté par chaque relais, de remontée de données de relève de comptage auprès du système d'information ;
[Fig. 8] illustre schématiquement un algorithme, implémenté par chaque compteur de fluide intelligent, de ré-appairage en cas de perte de synchronisation ; et
[Fig. 9] illustre schématiquement un algorithme, implémenté par le système d'information, de reconfiguration du réseau de collecte.

### EXPOSE DETAILLE DE MODES DE REALISATION

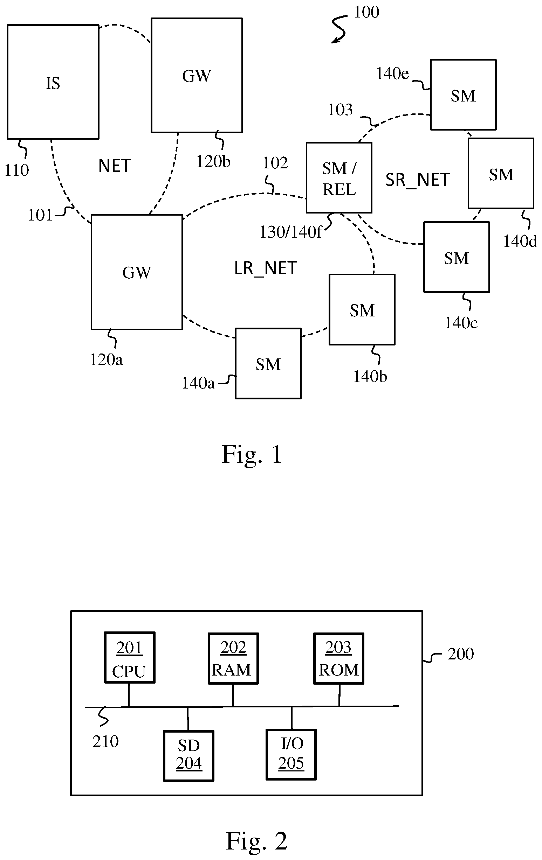

La Fig. 1 illustre ainsi schématiquement un système de gestion automatisée 100 configuré pour réaliser une relève de comptage auprès de compteurs de fluide intelligents SM (« Smart fluid Meters » en anglais). Les compteurs de fluide intelligents SM sont par exemple des compteurs de consommation de gaz, des compteurs de consommation d'énergie thermique ou des compteurs de consommation d'eau ou de tout autre type de fluide dont la consommation peut être mesurée, qui ont la capacité de communiquer par transmission radio. Les compteurs de fluide intelligents SM sont électriquement alimentés par batterie, c'est-à-dire avec une quantité limitée d'énergie en réserve.

Le système de gestion automatisée 100 comporte un système d'information IS (« Information System » en anglais) 110 dont le rôle est de surveiller des opérations de comptage effectuées par les compteurs de fluide intelligents SM. Pour ce faire, le système d'information IS 110 délègue la gestion d'un réseau de collecte à des passerelles GW (« GateWay » en anglais). Deux passerelles GW 120a, 120b sont représentées sur la Fig. 1 à titre d'exemple. Le système de gestion automatisée 100 comporte typiquement un plus grand nombre de telles passerelles GW. Le système d'information IS 110 prend la forme d'un serveur, ou d'un ensemble de serveurs, qui échange avec les passerelles GW 120a, 120b par le biais d'un réseau de communication NET 101. Par exemple, le réseau de communication NET 101 est l'Internet. Le réseau de communication NET 101 est par exemple un réseau de communication sans-fil, par exemple de type GPRS (« Général Packet Radio Service » en anglais), UMTS (« Universal Mobile Télécommunication System » en anglais) ou LTE (« Long-Term Evolution » en anglais).

Chaque passerelle GW 120a, 120b gère les communications avec un ensemble de compteurs de fluide intelligents SM par le biais d'un réseau de communication LR_NET 102. Le réseau de communication LR_NET 102 est un réseau de communication sans-fil à longue portée (« Long Range » en anglais). Préférentiellement, le réseau de communication LR_NET 102 est un réseau étendu à faible puissance LPWAN, par exemple selon la technologie LoRaWAN ou NB-IoT.

Grâce au réseau de communication LR_NET 102, la passerelle GW 120a communique directement avec des compteurs de fluide intelligents SM 140a, 140b. La passerelle GW 120a communique directement aussi avec un compteur de fluide intelligent SM 140f, auquel la passerelle GW 120a a attribué un rôle de relais REL 130. Le relais REL 130 sert d'intermédiaire entre, d'un côté, la passerelle GW 120a et le système d'information IS 110 et, d'un autre côté, d'autres compteurs de fluide intelligents SM 140c, 140d, 140e. Ces autres compteurs de fluide intelligents SM 140c, 140d, 140e ne disposent par exemple pas d'interface de communication compatible avec le réseau de communication LR_NET 102. Cet agencement est particulièrement avantageux dans le cas de petits collectifs dans lesquels une partie des compteurs de fluide intelligents SM comportent une interface compatible avec le réseau de communication SR_NET 103 mais pas d'interface compatible avec le réseau de communication LR_NET 102 et nécessitent donc l'utilisation d'un relais, alors que d'autres compteurs de fluide intelligents SM comportent les deux interfaces.

Ainsi, le relais REL 130 collecte et envoie périodiquement, par exemple une à plusieurs fois par jour, à destination du système d'information IS 110, des données d'index de comptage des compteurs de fluide intelligents SM 140c, 140d, 140e qui lui sont appairés.

Pour communiquer avec les compteurs de fluide intelligents SM 140c, 140d, 140e, le relais REL 130 gère un réseau de communication SR_NET 103. Le réseau de communication SR_NET 103 est un réseau de communication sans-fil à courte portée (« Short Range » en anglais), de plus faible portée radio que le réseau de communication LR_NET 102. Une interface de communication avec le réseau de communication SR_NET 103 consomme ainsi moins d'énergie qu'une interface de communication avec le réseau de communication LR_NET 102 pour une même quantité de données utiles à transmettre. Préférentiellement, le réseau de communication SR_NET 103 est un réseau conforme au standard WM-Bus, tel que défini dans la norme NF EN 13757-4, « Communication systems for meters and remote reading of meters - Part 4: Wireless meter readout (Radio meter reading for operation in SRD bands*) »*. Le standard WM-Bus est un standard de communication sans-fil offrant un excellent compromis entre faible encombrement des antennes et portée radio élevée en intérieur comme en extérieur (jusqu'à 1 km sans répéteurs). Toutefois, dans des variantes de réalisation, le réseau de communication SR_NET 103 est conforme à une autre technologie de communication sans-fil, comme par exemple BLE (« Bluetooth Low Energy » en anglais) ou ZigBee.

La **Fig. 2** illustre schématiquement un exemple d'architecture matérielle de dispositif 200 du système de gestion automatisée 100. Le dispositif 200 est la passerelle GW 120a, selon un mode de réalisation. Le dispositif 200 est un compteur de fluide intelligent SM apte à prendre le rôle de relais REL, selon un autre mode de réalisation. Le dispositif 200 est le système d'information IS 110, selon encore un autre mode de réalisation.

Le dispositif 200 comprend, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203, par exemple une mémoire Flash ; un dispositif de stockage de données, tel qu'un disque dur HDD (« Hard Disk Drive » en anglais), ou un lecteur de support de stockage, tel qu'un lecteur de cartes SD (« Secure Digital » en anglais) 204 ; au moins une interface d'entrée-sortie I/O 205.

Lorsque le dispositif 200 représente la passerelle GW 120a, l'interface d'entrée-sortie I/O 205 inclut une interface de communication avec le réseau de communication NET 101 et une interface de communication avec le réseau de communication LR_NET 102.

Lorsque le dispositif 200 représente un compteur de fluide intelligent SM apte à prendre le rôle de relais REL, l'interface d'entrée-sortie I/O 205 inclut une interface de communication avec le réseau de communication LR_NET 102 et une interface de communication avec le réseau de communication SR_NET 103. De plus, l'interface d'entrée-sortie I/O 205 inclut une interface de comptage afin d'effectuer des mesures de consommation et mettre à disposition un index de comptage correspondant.

Lorsque le dispositif 200 représente le système d'information IS 110, l'interface d'entrée-sortie I/O 205 inclut une interface de communication avec le réseau de communication NET 101.

Le processeur 201 est capable d'exécuter des instructions chargées dans la RAM 202 à partir de la ROM 203, d'une mémoire externe (non représentée), d'un support de stockage, tel qu'une carte SD, ou d'un réseau de communication (non représenté). Lorsque le dispositif 200 est mis sous tension, le processeur 201 est capable de lire de la RAM 202 des instructions et de les exécuter. Ces instructions forment un programme d'ordinateur causant la mise en oeuvre, par le processeur 201, des comportements, étapes et algorithmes décrits ici.

Tout ou partie des comportements, étapes et algorithmes décrits ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). D'une manière générale, le système de gestion automatisée 100 comprend de la circuiterie électronique agencée et configurée pour implémenter les comportements, étapes et algorithmes décrits ici.

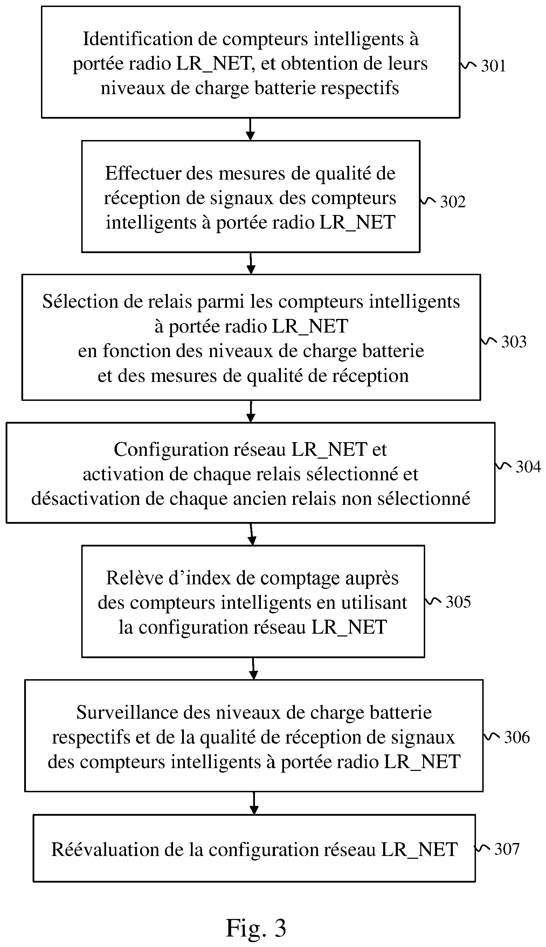

La Fig. 3 illustre schématiquement un algorithme, implémenté par chaque passerelle GW 120a, 120b. Considérons le cas de la passerelle GW 120a.

Dans une étape 301, la passerelle GW 120a échange des messages dans le réseau de communication LR_NET 102 et identifie des compteurs intelligents à portée radio dans le réseau de communication LR_NET 102. Ce sont les compteurs de fluide intelligents SM 140a, 140b, 140f sur la Fig. 1. De ces échanges, la passerelle GW 120a obtient desdits compteurs de fluide intelligents SM 140a, 140b, 140f leurs niveaux de charge batterie respectifs. Par exemple, le niveau de charge batterie est une information codée sur un octet et pouvant prendre les valeurs de 0 à 255, sachant que plus la valeur est élevée, plus la batterie a une durée de vie restante importante.

De plus, lors de ces échanges, la passerelle GW 120a effectue des mesures de qualité de réception de signaux venant de ces compteurs de fluide intelligents SM 140a, 140b, 140f à portée radio par le réseau de communication LR_NET 102. La passerelle GW 120a réalise ces mesures dans une étape 302. Les mesures de qualité de réception de ces signaux sont préférentiellement des mesures de rapport signal-à-bruit SNR (« Signal-to-Noise Ratio » en anglais).

Dans une étape 303, la passerelle GW 120a effectue une sélection de relais parmi les compteurs de fluide intelligents SM 140a, 140b, 140f à portée radio par le réseau de communication LR_NET 102, en fonction des niveaux de charge batterie de ces compteurs de fluide intelligents SM 140a, 140b, 140f. Le système de gestion automatisée 100 comporte théoriquement suffisamment de compteurs de fluide intelligents qui ont l'aptitude à agir comme relais, pour disposer de redondances suffisantes pour avoir (théoriquement) au moins une alternative lorsqu'un relais tombe en panne ou en niveau bas de charge batterie.

La passerelle GW 120a favorise comme relais au moins un de ces compteurs de fluide intelligents SM 140a, 140b, 140f dont le niveau de charge batterie est le plus haut. Préférentiellement, la passerelle GW 120a sélectionne comme relais au moins un de ces compteurs de fluide intelligents SM 140a, 140b, 140f dont le niveau de charge batterie est supérieur à un seuil prédéterminé BL_TH. Dans un mode de réalisation particulier, la passerelle GW 120a sélectionne comme relais chaque compteur de fluide intelligent SM 140a, 140b, 140f (à portée radio) dont le niveau de charge batterie est supérieur au seuil prédéterminé BL_TH.

Dans un mode de réalisation particulier, la passerelle GW 120a effectue la sélection de relais en fonction en outre des mesures de qualité de réception de signaux venant des compteurs de fluide intelligents SM 140a, 140b, 140f. La passerelle GW 120a favorise comme relais au moins un de ces compteurs de fluide intelligents SM 140a, 140b, 140f pour lequel la qualité de réception de signaux par la passerelle GW 120a est la plus haute. Préférentiellement, la passerelle GW 120a sélectionne comme relais au moins un de ces compteurs de fluide intelligents SM 140a, 140b, 140f pour lequel, en outre, la qualité de réception de signaux par la passerelle GW 120a est supérieure à un seuil prédéterminé SNR_TH. Dans un mode de réalisation particulier, la passerelle GW 120a sélectionne comme relais chaque compteur de fluide intelligent SM 140a, 140b, 140f (à portée radio) pour lequel, en outre, la qualité de réception de signaux par la passerelle GW 120a est supérieure au seuil prédéterminé SNR_TH.

Dans un mode de réalisation particulier, la passerelle GW 120a sait quels compteurs de fluide intelligents peuvent tenir le rôle de relais et pour quels autres compteurs de fluide intelligents SM (dans une zone géographique donnée), et sait donc quels relais activer de manière complémentaire, en fonction des niveaux de charge batterie des compteurs de fluide intelligents qui peuvent tenir le rôle de relais et en fonction éventuellement de leurs qualités de réception de signaux, pour assurer que l'ensemble des compteurs de fluide intelligents SM attendus dans le système de gestion automatisée 100 soit pris en charge.

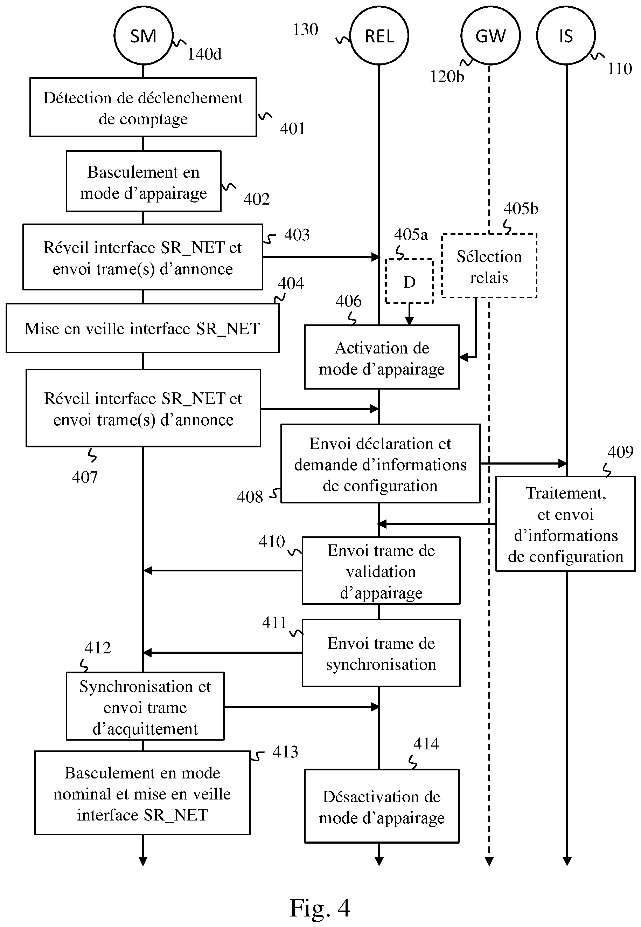

Dans une étape 304, la passerelle GW 120a configure le réseau de communication LR_NET conformément à la sélection de relais effectuée à l'étape 303. La passerelle GW 120a instruit chaque compteur de fluide intelligent SM sélectionné parmi les compteurs de fluide intelligents SM 140a, 140b, 140f d' activer la fonctionnalité de relais. La passerelle GW 120a instruit chaque compteur de fluide intelligent SM, dont la fonctionnalité de relais a été précédemment activée mais qui n'a pas été sélectionné dans l'étape 303, de désactiver la fonctionnalité de relais. Ainsi, à titre illustratif, le compteur de fluide intelligent SM 140f est sélectionné par la passerelle GW 120a au vu au moins de son niveau de charge batterie et active sa fonctionnalité de relais pour devenir le relais REL 130. Au moins un compteur de fluide intelligent SM peut alors lui être appairé pour bénéficier de la fonctionnalité de relais. Des échanges en ce sens sont expliqués ci-après en relation avec la Fig. 4.

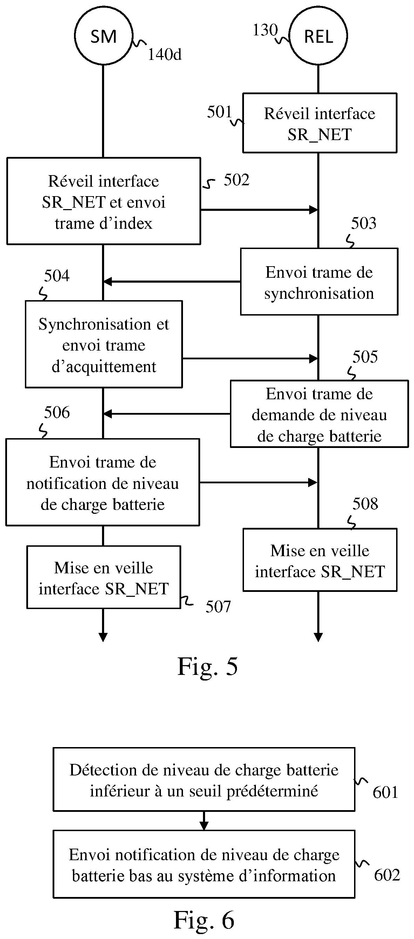

Dans une étape 305, la passerelle GW 120a contribue à effectuer une relève d'index de comptage des compteurs de fluide intelligents SM, pour le compte du système d'information IS 110, en s'appuyant sur la configuration du réseau de communication LR_NET établie et mise en place à l'étape 304. Ainsi, la relève d'index de comptage des compteurs de fluide intelligents SM 140c, 140d et 140e s'effectue par l'intermédiaire du relais REL 130. Des échanges en ce sens sont expliqués ci-après en relation avec la Fig. 5.

Dans une étape 306, lors de ses échanges avec les compteurs de fluide intelligents SM à portée radio par le réseau de communication LR_NET, la passerelle GW 120a obtient des mises à jour concernant leurs niveaux de charge batterie respectifs. La passerelle GW 120a surveille les niveaux de charge batterie pour déterminer si la sélection de relais dans le réseau de communication LR_NET doit être revue, typiquement suite au passage du niveau de charge batterie d'un compteur de fluide intelligent SM à portée radio agissant comme relais en dessous du seuil prédéterminé BL_TH. Préférentiellement, lors de ses échanges avec les compteurs de fluide intelligents SM à portée radio par le réseau de communication LR_NET, la passerelle GW 120a obtient des mises à jour concernant la qualité de réception par la passerelle GW 120a de signaux venant desdits compteurs de fluide intelligents SM à portée radio. La passerelle GW 120a surveille la qualité de réception des signaux venant desdits compteurs de fluide intelligents SM à portée radio pour déterminer si la sélection de relais dans le réseau de communication LR_NET doit être revue, typiquement suite au passage de la qualité de réception des signaux venant d'un compteur de fluide intelligent SM agissant comme relais en dessous du seuil prédéterminé SNR_TH.

Ainsi, lorsque la passerelle GW 120a détermine que la sélection de relais dans le réseau de communication LR_NET doit être revue, la passerelle GW 120a réévalue la configuration du réseau de communication LR_NET dans une étape 307, et réitère les étapes ci-dessus pour sélectionner de nouveaux relais appropriés.

Ainsi, si un compteur de fluide intelligent qui agit comme relais voit son niveau de charge batterie baisser, la passerelle GW 120a va trouver un relais de substitution disposant d'une plus grande réserve d'énergie (ou d'un meilleur compromis énergie en réserve / qualité de réception de signaux). Cela permet de maintenir le service, tout en déclenchant des interventions sur site (*e*.*g*., remplacement ou recharge de batterie) de manière appropriée et en préservant l'énergie disponible sur batterie.

Dans un mode de réalisation particulier, lorsqu'un compteur de fluide intelligent qui agissait comme relais et qui ne l'est plus détecte que certains compteurs de fluide intelligents à sa portée (par le troisième réseau de communication SR_NET 103) sont isolés et ne sont plus appairés (transmission de trames d'annonce sans réponse), il réactive automatiquement sa fonctionnalité de relais, permet aux compteurs de fluide intelligents SM en question d'effectuer un appairage et prévient la passerelle GW 120a qu'il agit à nouveau comme relais. La passerelle GW 120a peut alors en tenir compte lors de sa réévaluation de la configuration du réseau de communication LR_NET à l'étape 307.

La **Fig. 4** illustre schématiquement des échanges permettant d'appairer un compteur de fluide intelligent SM avec un relais dans le système de gestion automatisée 100.

Dans une étape 401, le compteur de fluide intelligent SM 140d a été nouvellement installé et détecte pour la toute première fois un déclenchement de comptage, qui est représentatif d'une toute première mise en service du compteur de fluide intelligent SM 140d.

Dans une étape 402, le compteur de fluide intelligent SM 140d bascule en conséquence en mode d'appairage.

Dans une étape 403, le compteur de fluide intelligent SM 140d réveille son interface de communication compatible avec le réseau de communication SR_NET 103 et envoie au moins une trame d'annonce via ladite interface. La trame d'annonce identifie le compteur de fluide intelligent SM 140d et notifie que le compteur de fluide intelligent SM 140d est en mode d'appairage. Préférentiellement, le compteur de fluide intelligent SM 140d transmet de telles trames d'annonce à intervalles réguliers, par exemple toutes les 5 minutes, en restant éveillé pendant une durée prédéfinie, par exemple 5 secondes, pour laisser l'opportunité d'une réponse d'un relais. De manière illustrative, le relais REL 130 n'étant pas en mode d'appairage au moment où le compteur de fluide intelligent SM 140d envoie au moins une trame d'annonce à l'étape 403, la durée prédéfinie expire et le compteur de fluide intelligent SM 140d remet en veille son interface de communication compatible avec le réseau de communication SR_NET 103 dans une étape 404.

Dans une étape 405a, le relais REL 130 détecte une opération de déclenchement via une interface homme-machine dudit relais REL 130. Par exemple, le relais REL 130 comporte un bouton actionnable par un utilisateur et le relais REL 130 détecte un appui sur ledit bouton, *e.g.,* un appui de durée comprise entre une borne min T_MIN par exemple de 2 secondes et une borne max T_MAX par exemple de 10 secondes. Dans une variante de réalisation, le relais REL 130 comporte un connecteur infrarouge. Par exemple, ce connecteur infrarouge est configuré pour connecter une sonde conforme au standard IEC 62056-21, aussi connue sous le nom de sonde FLAG. Une telle sonde permet de connecter un terminal d'installation et de maintenance communiquant par signaux infrarouge via ladite sonde. Le déclenchement peut alors être opéré par le terminal d'installation, et être communiqué au relais REL 130 via la sonde FLAG et le connecteur infrarouge. Alors, dans une étape 406, le relais REL 130 active le mode d'appairage.

Comme illustré sur la Fig. 4, l'activation du mode d'appairage par le relais REL 130 peut aussi faire suite à une sélection de relais par la passerelle GW 120a dans une étape 405b. Le compteur de fluide intelligent SM sélectionné comme relais reçoit alors un message de la passerelle GW 120a via le réseau de communication LR_NET 102, par lequel la passerelle GW 120a instruit le compteur de fluide intelligent SM d'activer sa fonctionnalité de relais (*e*.*g*., lorsque le compteur de fluide intelligent SM 140d devient le relais REL 130), ce qui entraîne l'activation du mode d'appairage dans l'étape 406. Le relais REL 130 se met alors en attente de recevoir une ou plusieurs trames d'annonce via le réseau de communication SR_NET 103.

Dans une étape 407, le compteur de fluide intelligent SM 140d réveille son interface de communication compatible avec le réseau de communication SR_NET 103 et envoie à nouveau au moins une trame d'annonce via ladite interface, typiquement après expiration d'un délai prédéterminée de mise en veille. Au moins une trame d'annonce est ainsi reçue par le relais REL 130, qui est à ce moment-là en mode d'appairage.

Dans une étape 408, le relais REL 130 envoie un message au système d'information IS via la passerelle GW 120a pour déclarer la connexion du compteur de fluide intelligent SM 140d (identifié par la trame d'annonce reçue) et pour demander d'éventuelles informations de configuration relatives au compteur de fluide intelligent SM 140d, comme par exemple une ou plusieurs clefs de chiffrement à utiliser dans des communications avec le compteur de fluide intelligent SM 140d. Dans un mode de réalisation particulier, le relais REL 130 joue un rôle de mandataire (« proxy » en anglais) et se comporte comme si les compteurs de fluide intelligents SM 140d qui lui sont appairés étaient colocalisés dans le relais 130.

Dans une étape 409, le système d'information IS 110 traite le message envoyé par le relais REL 130 déclarant la connexion du compteur de fluide intelligent SM 140d. Préférentiellement, le système d'information IS 110 récupère (« retrieve » en anglais) des informations de configuration, telles que la ou les clefs de chiffrement à utiliser dans des communications avec le compteur de fluide intelligent SM 140d, et les envoie en retour au relais REL 130. Le relais REL 130 utilise les informations de configuration obtenues du système d'information IS 110 pour se configurer et/ou configurer le compteur de fluide intelligent SM 140d.

Dans une étape 410, le relais REL 130 envoie au compteur de fluide intelligent SM 140d, en réponse à la trame d'annonce, une trame de validation d'appairage. La trame de validation d'appairage peut contenir des informations de configuration à appliquer. Le compteur de fluide intelligent SM 140d est alors informé du succès de l'appairage avec le relais REL 130.

Dans une étape 411, le relais REL 130 envoie une trame de synchronisation au compteur de fluide intelligent SM 140d. La trame de synchronisation contient une information d'heure courante (par exemple en heures, minutes et secondes) et une information d'heure de réveil (par exemple aussi en heures, minutes et secondes). Le relais REL 130 assure ainsi la synchronisation temporelle du compteur de fluide intelligent SM 140d. De son côté, le relais REL 130 peut être synchronisé temporellement par la passerelle GW 120a ou par le système d'information IS 110, ou par une référence temporelle autre (e.g. serveur tiers).

Dans une étape 412, le compteur de fluide intelligent SM 140d synchronise son horloge interne sur l'information d'heure courante contenue dans la trame de synchronisation (les temps de latence de transmission sont négligeables par rapport à la précision de l'horloge interne, par exemple de l'ordre de 100 millisecondes ou moins). Le compteur de fluide intelligent SM 140d programme une prochaine sortie de veille avec l'information d'heure de réveil contenue dans la trame de synchronisation. Et le compteur de fluide intelligent SM 140d transmet une trame d'acquittement au relais REL 130.

Dans une étape 413, le compteur de fluide intelligent SM 140d quitte le mode d'appairage et bascule en mode nominal, dans lequel ledit compteur de fluide intelligent SM 140d transmet des relevés d'index de comptage, dans des fenêtres temporelles définies par le relais REL 130 grâce aux trames de synchronisation (voir ci-après en relation avec la Fig. 5). Le compteur de fluide intelligent SM 140d met alors en veille son interface avec le réseau de communication SR_NET 103.

Dans une étape 414, le relais REL 130 désactive le mode d'appairage.

Dans un premier mode de réalisation, le relais REL 130 désactive le mode d'appairage dès que l'appairage avec le compteur de fluide intelligent SM 140d a pris effectivement fin, c'est-à-dire à la réception de la trame d'acquittement à l'étape 412. Ce premier mode de réalisation est par exemple déclenché sur détection d'un appui, sur le bouton d'interface homme-machine susmentionné, de durée comprise entre la borne min T_MIN (par exemple de 2 secondes) et la borne max T_MAX (par exemple de 10 secondes). Cela facilite le remplacement d'un compteur de fluide intelligent SM défectueux, ou la mise en place d'un nouveau compteur de fluide intelligent SM, à portée radio du relais REL 130. Le relais n'active le mode d'appairage que le temps nécessaire à la prise en compte d'un seul compteur de fluide intelligent SM.

Dans un deuxième mode de réalisation, le relais REL 130 désactive le mode d'appairage après expiration d'une durée prédéterminée d'activation, par exemple au bout de 10 minutes. Le deuxième mode de réalisation peut compléter le premier mode de réalisation. Ce deuxième mode de réalisation est par exemple déclenché sur détection d'un appui, sur le bouton d'interface homme-machine susmentionné, de durée au-delà de la borne max T_MAX (par exemple de 10 secondes). Cela permet d'identifier une toute première installation de compteur de fluide intelligent SM qui a la capacité d'agir comme relais. Cela facilite notamment le remplacement d'un relais défectueux, et accélère la réintégration dans le système de gestion automatisée 100. En effet, le nouveau relais prend rapidement la place du défectueux, qui peut avoir laissé un ou plusieurs compteurs de fluide intelligents SM sans solution d'appairage. Si le relais REL 130 réalise au moins un appairage avant extinction automatique du mode d'appairage, le relais REL 130 informe la passerelle GW 120 qu'il a adopté le rôle de relais. La passerelle GW 120a peut alors en tenir compte lors de sa réévaluation de la configuration du réseau de communication LR_NET à l'étape 307. Selon un autre exemple, ce deuxième mode de réalisation est déclenché sur instruction, venant de la passerelle GW 120a, d'activer la fonctionnalité de relais (étape 405b).

Si le relais REL 130 n'a pas d'autres traitements à réaliser dans l'immédiat, le relais REL 130 se met en mode de veille et met notamment en veille son interface avec le réseau de communication SR_NET 103.

Dans un mode de réalisation particulier, lorsque le relais REL 130 perd sa connexion avec la passerelle GW 120a via le réseau de communication LR_NET 102, le relais REL 130 désactive automatiquement la fonctionnalité de relais, reprend son simple rôle de compteur de fluide intelligent SM 140f, et cherche lui-même à être appairé avec un autre relais en appliquant la procédure de la Fig. 4 (trames d'annonce...).

Les ressources internes de chaque relais ne sont pas infinies. Chaque relais connaît le nombre *N* maximum de compteurs de fluide intelligents SM appairés qu'il peut gérer en parallèle. Par exemple, *N* = 5. Lorsque le nombre effectif de compteurs de fluide intelligents SM appairés atteint le maximum *N*, alors le relais REL 130 n'accepte pas de nouveaux appairages.

La **Fig. 5** illustre schématiquement des échanges permettant à un relais de réaliser la relève de comptage auprès d'au moins un compteur de fluide intelligent SM qui lui est appairé. Considérons le cas illustratif de la relève de comptage du compteur de fluide intelligent SM 140d par le relais REL 130.

Dans une étape 501, le relais REL 130 réveille son interface avec le réseau de communication SR_NET 103 et est apte à recevoir des trames des compteurs de fluide intelligents SM qui lui sont appairés. De manière illustrative, le relais REL 130 se réveille un temps prédéterminé Δt (par exemple, 1 seconde) avant l'instant supposé de réveil T₀ du compteur de fluide intelligent SM 140d, qui a été programmé à la réception de la toute dernière trame de synchronisation envoyée par le relais REL 130 au compteur de fluide intelligent SM 140d (*e*.*g*., les étapes 411 et 412). Le temps prédéterminé Δt est défini de sorte à au moins compenser la dérive d'horloge théorique maximale entre deux réveils successifs d'un compteur de fluide intelligent SM.

Dans une étape 502, le compteur de fluide intelligent SM 140d réveille son interface avec le réseau de communication SR_NET 103 et envoie au relais REL 130 une trame d'index incluant un relevé d'index de comptage effectué par ledit compteur de fluide intelligent SM 140d (typiquement, une valeur courante d'index). Le relais REL 130 collecte ainsi les données de comptage relatives au compteur de fluide intelligent SM 140d, pour pouvoir les relayer ensuite jusqu'au système d'information IS 110 via la passerelle GW 120a.

Dans une étape 503, le relais REL 130 envoie une trame de synchronisation au compteur de fluide intelligent SM 140d. Comme déjà décrit, la trame de synchronisation contient une information d'heure courante et une information d'heure de réveil. Le relais REL 130 maintient ainsi la synchronisation temporelle du compteur de fluide intelligent SM 140d.

Dans une étape 504, le compteur de fluide intelligent SM 140d synchronise son horloge interne sur l'information d'heure courante contenue dans la trame de synchronisation. Le compteur de fluide intelligent SM 140d programme une prochaine sortie de veille avec l'information d'heure de réveil contenue dans la trame de synchronisation. Et le compteur de fluide intelligent SM 140d transmet une trame d'acquittement au relais REL 130.

Dans une étape optionnelle 505, le relais REL 130 envoie au compteur de fluide intelligent SM 140d une trame de demande de niveau de charge batterie, et dans une étape 506, le compteur de fluide intelligent SM 140d répond avec une trame de notification de niveau de charge batterie qui inclut une information codée représentative du niveau de charge de la batterie du compteur de fluide intelligent SM 140d. Cela permet d'alerter le système d'information SI 110, et/ou la passerelle GW 120a, lorsqu'il reste au compteur de fluide intelligent SM 140d un niveau de charge batterie faible (inférieur à un seuil d'alerte prédéterminé A_TH). Le système d'information SI 110 peut ainsi en être alerté par le compteur de fluide intelligent SM 140d et/ou par la passerelle GW 120a. Cet aspect est adressé ci-après en relation avec la Fig. 6.

Dans une étape 507, le compteur de fluide intelligent SM 140d met en veille son interface avec le réseau de communication SR_NET 103 jusqu'à l'instant programmé de prochaine sortie de veille. Dans un mode de réalisation particulier, le compteur de fluide intelligent SM 140d effectue la mise en veille après expiration d'un délai prédéterminé depuis son réveil à l'étape 502, par exemple après 3 secondes.

Si le relais REL 130 n'a pas d'autres traitements à réaliser dans l'immédiat, le relais REL 130 se met en mode de veille et met notamment en veille son interface avec le réseau de communication SR_NET 103 dans une étape 508.

Les échanges décrits ci-dessus en relation avec les Figs. 4 et 5 s'appuient sur des trames de commande et des trames de réponse.

Les trames de commande permettent notamment de :
- mettre à l'heure un compteur de fluide intelligent (première partie de données utiles) et le synchroniser pour le prochain réveil (deuxième partie de données utiles) : c'est la trame de synchronisation (par exemple, sous la forme d'une trame de commande ayant un code opérationnel sur un octet égal à 0x01, avec 3 octets pour la première partie et 3 octets pour la deuxième partie) ;
- demander le niveau de charge batterie à un compteur de fluide intelligent : c'est la trame de demande de niveau de charge batterie (par exemple, sous la forme d'une trame de commande ayant un code opérationnel sur un octet égal à 0x02, sans données utiles associées).

Les trames de réponse permettent notamment :
- d'envoyer un acquittement : c'est la trame d'acquittement (par exemple, sous la forme d'une trame de réponse ayant un code opérationnel sur un octet égal à 0x01, sans données utiles) ;
- d'envoyer un relevé d'index de comptage du compteur de fluide intelligent en question : c'est la trame d'index (par exemple, sous la forme d'une trame de réponse ayant un code opérationnel sur un octet égal à 0x02, avec 4 octets de données utiles de relevé d'index) ;
- d'envoyer le niveau de charge batterie du compteur de fluide intelligent en question : c'est la trame de notification de niveau de charge batterie (par exemple, sous la forme d'une trame de réponse ayant un code opérationnel sur un octet égal à 0x03, avec 1 octet de données utiles de niveau de charge batterie).

La **Fig. 6** illustre schématiquement un algorithme, implémenté par chaque passerelle telle que la passerelle GW 120a, de notification d'alerte à un système d'information IS 110.

Dans une étape 601, la passerelle GW 120a détecte qu'un compteur de fluide intelligent SM a un niveau de charge batterie faible (inférieur au seuil d'alerte A_TH). La passerelle GW 120a connaît à intervalles réguliers les niveaux de charge batterie des compteurs de fluide intelligents SM qui lui sont directement connectés par le réseau de communication LR_NET 102 (étape 306), y compris ceux agissant comme relais. Pour les autres compteurs de fluide intelligents SM qui ne sont pas connectés au réseau de communication LR_NET 102, leurs niveaux de charge batterie peuvent être communiqués par les relais qui les ont précédemment collectés (étape 506).

Dans une étape 602, la passerelle GW 120a envoie au système d'information SI 110 une alerte notifiant d'un niveau de charge batterie bas pour le compteur de fluide intelligent SM en question et qu'une intervention sur site est souhaitable (remplacement ou recharge de la batterie). La maintenance du système de gestion automatisée 100 s'en trouve améliorée.

L'algorithme de la Fig. 6 peut aussi être implémenté par les relais du système de gestion automatisée 100, qui notifient alors le système d'information IS 110, ou notifient la passerelle GW 120a qui notifie à son tour le système d'information IS 110.

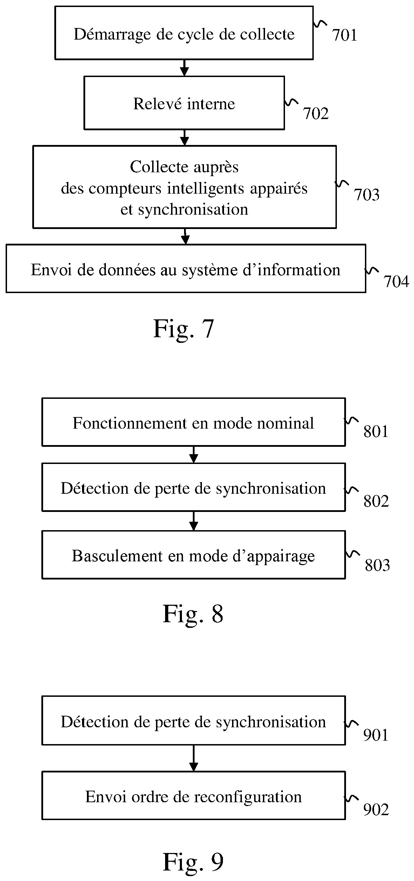

La **Fig. 7** illustre schématiquement un algorithme, implémenté par chaque relais tel que le relais REL 130, de remontée de données de relève de comptage auprès du système d'information IS 110.

Dans une étape 701, le relais REL 130 se réveille et démarre un cycle de collecte.

Dans une étape 702, le relais REL 130 effectue un relevé interne de l'index de comptage (relais REL 130 dans sa fonction de base de compteur de fluide intelligent SM).

Dans une étape 703, le relais REL 130 collecte, auprès de chaque compteur de fluide intelligent SM qui lui est appairé, un relevé d'index de comptage effectué par ledit compteur de fluide intelligent SM. Le relais REL 130 collecte préférentiellement, auprès de chaque compteur de fluide intelligent SM qui lui est appairé, le niveau de charge batterie dudit compteur de fluide intelligent SM. Le relais REL 130 remet à l'heure chaque compteur de fluide intelligent SM qui lui est appairé et programme son prochain réveil. Les échanges se déroulent comme déjà décrit en relation avec la Fig. 5.

Le relais REL 130 définit à quels instants les compteurs de fluide intelligents SM qui lui sont appairés se réveillent. Le relais REL 130 peut ainsi assurer que les compteurs de fluide intelligents SM qui lui sont appairés se réveillent pendant des fenêtres temporelles distinctes, afin de limiter les interférences de transmission. Dans un mode de réalisation particulier, le relais REL 130 effectue des cycles de collecte où les compteurs de fluide intelligents SM qui lui sont appairés se réveillent pendant des fenêtres temporelles consécutives séparées temporellement de 2* Δt pour prendre en compte les dérives d'horloge. A la fin du traitement d'un cycle de collecte, le relais REL 130 peut effectuer une mise en veille jusqu'au prochain cycle de collecte.

Dans un mode de réalisation particulier, dans le cas où le relais REL 130 n'a pas réussi à collecter le relevé d'index d'un compteur de fluide intelligent SM qui lui est appairé, le relais REL 130 retente au prochain cycle de collecte. Après un certain nombre de tentatives infructueuses, le relais REL 130 considère que la communication avec le compteur de fluide intelligent SM en question a été rompue. Le relais REL 130 l'exclut alors des prochains cycles de collecte. Soit un appairage est possible et le compteur de fluide intelligent SM va trouver un autre relais (voir Fig. 8), soit le compteur de fluide intelligent SM nécessite une intervention sur site (réparation, remplacement).

Dans une étape 704, le relais REL 130 envoie les relevés d'index collectés aux étapes 702 et 703 à destination du système d'information IS 110. Le relais REL 130 peut envoyer les relevés d'index collectés aux étapes 702 et 703 à la passerelle GW 120a, qui les envoie à son tour au système d'information IS 110. Préférentiellement, le relais REL 130 envoie aussi à la passerelle GW 120a son niveau de charge batterie, ainsi que le niveau de charge batterie de chaque compteur de fluide intelligent SM qui lui est appairé.

Ensuite, le relais REL 130 peut effectuer une mise en veille jusqu'au prochain cycle de collecte. Un laps de temps très étroit à chaque cycle de collecte est ainsi nécessaire, du côté relais comme du côté des compteurs de fluide intelligents SM appairés.

La **Fig. 8** illustre schématiquement un algorithme, implémenté par chaque compteur de fluide intelligent SM, de ré-appairage en cas de perte de synchronisation.

Dans une étape 801, le compteur de fluide intelligent SM en question est appairé avec un relais et opère en mode nominal.

Dans une étape 802, le compteur de fluide intelligent SM en question détecte une perte de synchronisation, c'est-à-dire qu'une période d'une durée supérieure à un seuil prédéterminée SYNC_TH (par exemple, de 8 minutes) s'est écoulée depuis la dernière remise à l'heure par le relais auquel ledit compteur de fluide intelligent SM est appairé. En perte de synchronisation, le compteur de fluide intelligent SM en question doit se trouver à nouveau un relais.

Alors, dans une étape 803, le compteur de fluide intelligent SM sort du mode nominal, bascule en mode d'appairage et applique la procédure de la Fig. 4 (trames d'annonce...).

Dans le cas d'un remplacement d'un relais défectueux, chaque compteur de fluide intelligent SM qui lui est appairé bascule ainsi automatiquement en mode d'appairage jusqu'à ce que le nouveau relais soit en service, comme déjà décrit ci-dessus.

La **Fig. 9** illustre schématiquement un algorithme, implémenté par le système d'information IS 110, de reconfiguration du réseau de communication LR_NET 102 ou par la passerelle GW 120a.

Dans une étape 901, le système d'information IS 110 ou la passerelle GW 120a détecte une perte de synchronisation avec un compteur de fluide intelligent SM. Par exemple, le système d'information IS 110 ou la passerelle GW 120a n'a pas reçu de relevé d'index de comptage pour le compteur de fluide intelligent SM en question depuis un nombre de cycles de collecte supérieur à un seuil prédéterminé C_TH.

Dans une étape 902, le système d'information IS 110 ou la passerelle GW 120a force une reconfiguration du réseau de communication LR_NET 102 de sorte à tenter de resynchroniser le compteur de fluide intelligent SM en question (qui doit avoir basculé en mode d'appairage s'il n'est pas défectueux, voir Fig. 8). Le système d'information IS 110 envoie un ordre de reconfiguration à la passerelle GW 120a. Dans ce cas, ou si la passerelle GW 120a implémente l'algorithme de la Fig. 9, la passerelle réévalue la configuration du réseau de communication LR_NET comme à l'étape 307 pour sélectionner de nouveaux relais appropriés.

Lorsqu'un relais est confirmé dans son rôle de relais après réévaluation de la configuration du réseau de communication LR_NET par la passerelle GW 120a, cette dernière en informe le relais en question, qui bascule alors en mode d'appairage (voir l'étape 405b) pour permettre, au besoin, à un ou plusieurs compteurs de fluide intelligents SM qui ne seraient plus appairés d'être pris en charge par ledit relais.

## Revendications

1. Procédé de configuration de réseau de communication par une passerelle (120a) agissant comme intermédiaire entre une pluralité de compteurs de fluide intelligents (140a, 140b, 140c, 140d, 140e, 140f) et un système d'information (110) en charge de collecter des relevés d'index de comptages effectués par lesdits compteurs de fluide intelligents (140a, 140b, 140c, 140d, 140e, 140f), la passerelle (120a) étant connectée au système d'information (110) par un premier réseau de communication (101), la passerelle (120a) étant reliée à des premiers compteurs de fluide intelligents (140a, 140b, 140f) parmi ladite pluralité grâce à un deuxième réseau de communication à longue portée radio (102), desdits premiers compteurs de fluide intelligents (140a, 140b, 140f) pouvant agir comme relais pour des seconds compteurs de fluide intelligents (140c, 140d, 140e) grâce à un troisième réseau de communication à courte portée radio (103), dans lequel la passerelle (120a) effectue les étapes suivantes :
- obtenir (301), via le deuxième réseau de communication à longue portée radio (102), des niveaux de charge batterie des premiers compteurs de fluide intelligents (140a, 140b, 140f) ;
- sélectionner (303) un ou plusieurs premiers compteurs de fluide intelligents (140f) comme relais (130), en fonction des niveaux de charge batterie obtenus, en favorisant les premiers compteurs de fluide intelligents dont le niveau de charge batterie est le plus haut ;
- configurer (304) le deuxième réseau de communication à longue portée radio (102), en instruisant les premiers compteurs de fluide intelligents sélectionnés comme relais (130, 140f) d'activer leur fonctionnalité de relais et en instruisant d'éventuels anciens relais qui n'ont pas été de nouveau sélectionnés comme relais de désactiver leur fonctionnalité de relais ;
- surveiller (306) les niveaux de charge batterie des premiers compteurs de fluide intelligents (140a, 140b, 140f) et réévaluer (307) la configuration du deuxième réseau de communication à longue portée radio (102) en conséquence.

2. Procédé selon la revendication 1, dans lequel la passerelle (120a) sélectionne (303) comme relais (130) chaque premier compteur de fluide intelligent dont le niveau de charge batterie est supérieur à un premier seuil prédéterminé.

3. Procédé selon la revendication 1 ou 2, dans lequel la passerelle (120a) effectue les étapes suivantes :
- effectuer (302), lors d'échanges avec les premiers compteurs de fluide intelligents via le deuxième réseau de communication à longue portée radio, des mesures de qualité de réception de signaux venant des premiers compteurs de fluide intelligents ;
- sélectionner (303) un ou plusieurs premiers compteurs de fluide intelligents (140f) comme relais (130), en fonction en outre des mesures de qualité de réception de signaux effectuées, en favorisant les premiers compteurs de fluide intelligents pour lesquels la qualité de réception de signaux est la plus haute ;
- surveiller (306) la qualité de réception de signaux transmis par les premiers compteurs de fluide intelligents dans le deuxième réseau de communication à longue portée radio (102), et réévaluer (307) la configuration du deuxième réseau de communication à longue portée radio (102) en conséquence.

4. Procédé selon la revendication 3, dans lequel la passerelle (120a) sélectionne (303) comme relais (130) chaque premier compteur de fluide intelligent pour lequel la qualité de réception de signaux par la passerelle est supérieure à un second seuil prédéterminé.

5. Procédé selon l'une quelconque des revendications 1 à 4, dans lequel les seconds compteurs de fluide intelligents (140c, 140d, 140e) sont appairés avec les premiers compteurs de fluide intelligents (140f) agissant comme relais (130) pour lesdits seconds compteurs de fluide intelligents (140c, 140d, 140e), en effectuant les étapes suivantes :
- chaque second compteur de fluide intelligent (140c, 140d, 140e), dans un mode d'appairage, envoie (403, 407) des trames d'annonce jusqu'à réception d'une réponse d'un premier compteur de fluide intelligent agissant comme relais (130) ;
- chaque premier compteur de fluide intelligent agissant comme relais (130) en mode d'appairage et à portée radio du troisième réseau de communication à courte portée radio (103), répond (410) à au moins une trame d'annonce reçue et s'appaire avec le second compteur de fluide intelligent (140c, 140d, 140e) ayant émis la trame d'annonce répondue.

6. Procédé selon la revendication 5, dans lequel au moins un dit second compteur de fluide intelligent (140c, 140d, 140e) bascule (402) dans le mode d'appairage sur détection (401) pour la toute première fois d'un déclenchement de comptage.

7. Procédé selon la revendication 5 ou 6, dans lequel au moins un dit second compteur de fluide intelligent (140c, 140d, 140e) bascule (402) dans le mode d'appairage suite à une perte de synchronisation avec un relais précédent.

8. Procédé selon l'une quelconque des revendications 5 à 7, dans lequel un dit relais (130) bascule (406) en mode d'appairage sur détection (405a) d'un appui sur un bouton d'interface homme-machine du relais (130) en question ou sur réception d'instructions spécifiques via un connecteur infrarouge du relais (130) en question.

9. Procédé selon la revendication 8, dans lequel la détection (405a) d'un appui sur le bouton d'interface pendant une durée comprise entre une borne minimum et une borne maximum instruit le relais (130) en question de basculer en mode d'appairage de sorte à permettre à un unique second compteur de fluide intelligent de s'appairer et la détection (405a) d'un appui sur le bouton d'interface pendant une durée supérieure à la borne maximum instruit le premier compteur de fluide intelligent en question de basculer en mode d'appairage pendant une durée prédéterminée.

10. Procédé selon l'une quelconque des revendications 5 à 9, dans lequel un dit relais (130) bascule en mode d'appairage sur réception d'instructions (405b) de la passerelle (120a) d'activer ou de maintenir la fonctionnalité de relais.

11. Procédé selon l'une quelconque des revendications 1 à 10, dans lequel chaque relais (130) collecte (505, 506) via le troisième réseau de communication à courte portée radio (103) le niveau de charge batterie de chaque second compteur de fluide intelligent (140c, 140d, 140e) qui lui est appairé et en informe la passerelle (120a), la passerelle (120a) alertant (602) le système d'information (110) lorsque le niveau de charge batterie d'un compteur de fluide intelligent est inférieur à un seuil prédéterminé d'alerte.

12. Procédé selon l'une quelconque des revendications 1 à 11, dans lequel lorsqu'un premier compteur de fluide intelligent qui agissait comme relais et qui ne l'est plus détecte qu'au moins un second compteur de fluide intelligent est isolé et n'est plus appairé, le premier compteur de fluide intelligent réactive automatiquement sa fonctionnalité de relais, permet à chaque second compteur de fluide intelligent en question d'effectuer un appairage et prévient la passerelle (120a) qu'il agit à nouveau comme relais.

13. Procédé selon l'une quelconque des revendications 1 à 12, dans lequel lorsqu'un relais (130) perd sa connexion avec la passerelle (120a) via le deuxième réseau de communication à longue portée radio (102), le relais (130) en question désactive automatiquement la fonctionnalité de relais, reprend son simple rôle de compteur de fluide intelligent (140f), et cherche lui-même à être appairé avec un autre relais.

14. Produit programme d'ordinateur comportant des instructions pour implémenter le procédé selon l'une quelconque des revendications 1 à 4, lorsque lesdites instructions sont exécutées par un processeur.

15. Support de stockage d'informations stockant des instructions pour implémenter le procédé selon l'une quelconque des revendications 1 à 4, lorsque lesdites instructions sont lues depuis le support de stockage d'informations et exécutées par un processeur.

16. Passerelle (120a) configurée pour agir comme intermédiaire entre une pluralité de compteurs de fluide intelligents (140a, 140b, 140c, 140d, 140e, 140f) et un système d'information (110) en charge de collecter des relevés d'index de comptages effectués par lesdits compteurs de fluide intelligents (140a, 140b, 140c, 140d, 140e, 140f), la passerelle (120a) étant configurée pour être connectée au système d'information (110) par un premier réseau de communication (101) et pour être reliée à des premiers compteurs de fluide intelligents (140a, 140b, 140f) parmi ladite pluralité grâce à un deuxième réseau de communication à longue portée radio (102), desdits premiers compteurs de fluide intelligents (140a, 140b, 140f) pouvant agir comme relais pour des seconds compteurs de fluide intelligents de ladite pluralité grâce à un troisième réseau de communication à courte portée radio (103), la passerelle (120a) comportant de la circuiterie électronique configurée pour :
- obtenir (301), via le deuxième réseau de communication à longue portée radio (102), des niveaux de charge batterie des premiers compteurs de fluide intelligents (140a, 140b, 140f) ;
- sélectionner (303) un ou plusieurs premiers compteurs de fluide intelligents comme relais (130), en fonction des niveaux de charge batterie obtenus, en favorisant les premiers compteurs de fluide intelligents dont le niveau de charge batterie est le plus haut ;
- configurer (304) le deuxième réseau de communication à longue portée radio (102), en instruisant les premiers compteurs de fluide intelligents sélectionnés comme relais (130) d'activer leur fonctionnalité de relais et en instruisant d'éventuels anciens relais qui n'ont pas été de nouveau sélectionnés comme relais de désactiver leur fonctionnalité de relais ;
- surveiller (306) les niveaux de charge batterie des premiers compteurs de fluide intelligents et réévaluer (307) la configuration du deuxième réseau de communication à longue portée radio (102) en conséquence.

17. Système de gestion automatisée pour collecter des relevés d'index de comptages effectués par des compteurs de fluide intelligents dudit système, le système comportant en outre un système d'information et une passerelle selon la revendication 16.

## Patentansprüche

1. Verfahren zur Konfiguration eines Kommunikationsnetzwerkes durch ein Gateway (120a), das als Vermittler zwischen einer Vielzahl von intelligenten Flüssigkeitszählern (140a, 140b, 140c, 140d, 140e, 140f) und einem Informationssystem (110) fungiert, das für das Sammeln der Ablesungen von Zählerständen zuständig ist, die von den intelligenten Flüssigkeitszählern (140a, 140b, 140c, 140d, 140e, 140f) durchgeführt werden. Dabei ist das Gateway (120a) über ein erstes Kommunikationsnetzwerk (101) mit dem Informationssystem (110) verbunden und das Gateway (120a) ist mit ersten intelligenten Flüssigkeitszählern (140a, 140b, 140f) aus dieser Vielzahl über ein zweites Kommunikationsnetzwerk mit großer Reichweite über Funk (102) verbunden. Diese ersten intelligenten Flüssigkeitszähler (140a, 140b, 140f) können als Relais für zweite intelligente Flüssigkeitszähler (140c, 140d, 140e) über ein drittes Kommunikationsnetzwerk mit kurzer Reichweite über Funk (103) fungieren, wobei das Gateway (120a) die folgenden Schritte ausführt:
- Erhalt (301), über das zweite Kommunikationsnetzwerk mit großer Reichweite über Funk (102), von Batterieladezuständen der ersten intelligenten Flüssigkeitszähler (140a, 140b, 140f);
- Auswahl (303) eines oder mehrerer erster intelligenter Flüssigkeitszähler (140f) als Relais (130), in Abhängigkeit von den erhaltenen Batterieladeständen, wobei die ersten intelligenten Flüssigkeitszähler mit dem höchsten Batterieladestand bevorzugt werden;
- Konfiguration (304) des zweiten Kommunikationsnetzwerk mit großer Reichweite über Funk (102), indem die ersten intelligenten Flüssigkeitszähler, die als Relais (130, 140f) ausgewählt wurden, angewiesen werden, ihre Relaisfunktionalität zu aktivieren, und indem etwaige alte Relais, die nicht erneut als Relais ausgewählt wurden, angewiesen werden, ihre Relaisfunktionalität zu deaktivieren;
- Überwachung (306) der Batterieladestände der ersten intelligenten Flüssigkeitszähler (140a, 140b, 140f) und entsprechendes Neubewerten (307) der Konfiguration des zweiten Kommunikationsnetzwerks mit großer Reichweite über Funk (102).

2. Verfahren nach Anspruch 1, bei dem das Gateway (120a) jeden ersten intelligenten Flüssigkeitszähler, dessen Batterieladestand über einem ersten vorbestimmten Schwellenwert liegt, als Relais (130) auswählt (303).

3. Verfahren nach Anspruch 1 oder 2, bei dem das Gateway (120a) die folgenden Schritte ausführt:
- Durchführung (302) von Messungen der Empfangsqualität von Signalen von den ersten intelligenten Flüssigkeitszählern, wenn diese über das zweite Kommunikationsnetzwerk mit großer Reichweite über Funk mit den ersten intelligenten Flüssigkeitszählern ausgetauscht werden;
- Auswahl (303) eines oder mehrerer erster intelligenter Flüssigkeitszähler (140f) als Relais (130), ferner in Abhängigkeit von den durchgeführten Messungen der Empfangsqualität von Signalen, wobei die ersten intelligenten Flüssigkeitszähler bevorzugt werden, für welche die Empfangsqualität von Signalen am höchsten ist;
- Überwachung (306) der Empfangsqualität von Signalen, die von den ersten intelligenten Flüssigkeitszählern in dem zweiten Kommunikationsnetzwerk mit großer Reichweite über Funk (102) gesendet werden, und entsprechendes Neubewerten (307) der Konfiguration des zweiten Kommunikationsnetzwerkes mit großer Reichweite über Funk (102).

4. Verfahren nach Anspruch 3, bei dem das Gateway (120a) jeden ersten intelligenten Flüssigkeitszähler, bei dem die Empfangsqualität von Signalen durch das Gateway größer als ein zweiter vorbestimmter Schwellenwert ist, als Relais (130) auswählt (303).

5. Verfahren nach einem der Ansprüche 1 bis 4, bei dem die zweiten intelligenten Flüssigkeitszähler (140c, 140d, 140e) mit den ersten intelligenten Flüssigkeitszählern (140f) gepaart werden, die als Relais (130) für die zweiten intelligenten Flüssigkeitszähler (140c, 140d, 140e) fungieren, indem die folgenden Schritte ausgeführt werden:
- jeder zweite intelligente Flüssigkeitszähler (140c, 140d, 140e) in einem Pairing-Modus sendet (403, 407) Ankündigungsrahmen, bis eine Antwort von einem ersten intelligenten Flüssigkeitszähler, der als Relais (130) fungiert, empfangen wird;
- jeder erste intelligente Flüssigkeitszähler, der als Relais (130) im Pairing-Modus und in Funkreichweite des dritten Kommunikationsnetzwerkes mit kurzer Reichweite über Funk (103) fungiert, auf mindestens einen empfangenen Ankündigungsrahmen antwortet (410) und mit dem zweiten intelligenten Flüssigkeitszähler (140c, 140d, 140e), der den beantworteten Ankündigungsrahmen gesendet hat, ein Pairing eingeht.

6. Verfahren nach Anspruch 5, bei dem mindestens einer der zweiten intelligenten Flüssigkeitszähler (140c, 140d, 140e) bei der allerersten Erkennung (401) einer Auslösung des Zählens in den Pairing-Modus umschaltet (402).

7. Verfahren nach Anspruch 5 oder 6, bei dem mindestens einer der genannten zweiten intelligenten Flüssigkeitszähler (140c, 140d, 140e) nach einem Verlust der Synchronisation mit einem vorherigen Relais in den Pairing-Modus umschaltet (402).

8. Verfahren nach einem der Ansprüche 5 bis 7, bei dem ein Relais ( 130) bei Erkennung (405a) eines Drucks auf eine Taste der Mensch-Maschine-Schnittstelle des betreffenden Relais (130) oder bei Empfang spezifischer Anweisungen über einen Infrarotanschluss des betreffenden Relais ( 130) in den Pairing-Modus umgeschaltet wird (406).

9. Verfahren nach Anspruch 8, bei dem eine Erkennung (405a) eines Drucks auf eine Taste der Schnittstelle für eine Zeitdauer zwischen einem Minimalwert und einem Maximalwert das betreffende Relais (130) anweist, in den Pairing-Modus zu wechseln, so dass ein einzelner zweiter intelligenter Flüssigkeitszähler gepaart werden kann, und bei dem eine Erkennung (405a) eines Drucks auf eine Taste der Schnittstelle für eine Zeitdauer, die größer als der Maximalwert ist, den betreffenden ersten intelligenten Flüssigkeitszähler anweist, für eine vorbestimmte Zeitdauer in den Pairing-Modus zu wechseln.

10. Verfahren nach einem der Ansprüche 5 bis 9, bei dem ein besagtes Relais (130) bei Empfang von Anweisungen (405b) vom Gateway (120a), die Relaisfunktionalität zu aktivieren oder aufrechtzuerhalten, in den Pairing-Modus wechselt.

11. Verfahren nach einem der Ansprüche 1 bis 10, bei dem jedes Relais (130) über das dritte Kommunikationsnetzwerk mit kurzer Reichweite über Funk (103) den Batterieladezustand jedes zweiten intelligenten Flüssigkeitszählers (140c 140d, 140e), der mit ihm gepaart ist, sammelt (505, 506) und das Gateway (120a) darüber informiert. Dabei alarmiert (602) das Gateway (120a) das Informationssystem (110), wenn der Batterieladezustand eines intelligenten Flüssigkeitszählers unter einer vorab festgelegten Warnschwelle liegt.

12. Verfahren nach einem der Ansprüche 1 bis 11, bei dem, wenn ein erster intelligenter Flüssigkeitszähler, der als Relais fungierte und nicht mehr als Relais fungiert, feststellt, dass mindestens ein zweiter intelligenter Flüssigkeitszähler isoliert und nicht mehr gepaart ist, der erste intelligente Flüssigkeitszähler automatisch seine Relaisfunktionalität wieder aktiviert. Somit ermöglicht dieser in Frage kommenden zweiten intelligenten Flüssigkeitszähler, ein Pairing durchzuführen, und er benachrichtigt das Gateway (120a), dass er wieder als Relais fungiert.

13. Verfahren nach einem der Ansprüche 1 bis 12, bei dem, wenn ein Relais (130) seine Verbindung mit dem Gateway (120a) über das zweite Kommunikationsnetzwerk mit großer Reichweite über Funk (102) verliert, das betreffende Relais (130) automatisch die Relaisfunktionalität deaktiviert, seine einfache Rolle als intelligenter Flüssigkeitszähler (140f) wieder aufnimmt und selbst versucht, mit einem anderen Relais gepaart zu werden.

14. Computerprogrammprodukt mit Anweisungen zum Implementieren des Verfahrens nach einem der Ansprüche 1 bis 4, wenn die Anweisungen von einem Prozessor ausgeführt werden.

15. Informationsspeichermedium, das Anweisungen zum Implementieren des Verfahrens nach einem der Ansprüche 1 bis 4 speichert, wenn die Anweisungen von dem Informationsspeichermedium gelesen und von einem Prozessor ausgeführt werden.

16. Gateway (120a), das so konfiguriert ist, dass es als Vermittler zwischen einer Vielzahl von intelligenten Flüssigkeitszählern (140a, 140b, 140c, 140d, 140e, 140f) und einem Informationssystem (110) fungiert, das dafür zuständig ist, Ablesungen von Zählerständen zu sammeln, die von diesen intelligenten Flüssigkeitszählern (140a, 140b, 140c, 140d, 140e, 140f) durchgeführt werden. Dabei ist das Gateway (120a) so konfiguriert ist, dass es über ein erstes Kommunikationsnetzwerk (101) mit dem Informationssystem (110) verbunden ist und mit ersten intelligenten Flüssigkeitszählern (140a, 140b, 140f) aus dieser Vielzahl über ein zweites Kommunikationsnetzwerk mit großer Reichweite über Funk (102) verbunden wird. Diese ersten intelligenten Flüssigkeitszähler (140a, 140b, 140f) können als Relais für zweite intelligente Flüssigkeitszähler aus dieser Vielzahl über ein drittes Kommunikationsnetzwerk mit kurzer Reichweite über Funk (103) fungieren. Das Gateway (120a) umfasst elektronische Schaltungen umfasst, die für Folgendes konfiguriert sind:
- Erhalt (301), über das zweite Kommunikationsnetzwerk mit großer Reichweite über Funk (102), von Batterieladezuständen der ersten intelligenten Flüssigkeitszähler (140a, 140b, 140f);
- Auswahl (303) eines oder mehrerer erster intelligenter Flüssigkeitszähler als Relais (130), in Abhängigkeit von den erhaltenen Batterieladeständen, wobei die ersten intelligenten Flüssigkeitszähler mit dem höchsten Batterieladestand bevorzugt werden;
- Konfiguration (304) des zweiten Kommunikationsnetzwerkes mit großer Reichweite über Funk (102), indem die ersten intelligenten Flüssigkeitszähler, die als Relais ( 130) ausgewählt wurden, angewiesen werden, ihre Relaisfunktionalität zu aktivieren, und indem etwaige alte Relais, die nicht erneut als Relais ausgewählt wurden, angewiesen werden, ihre Relaisfunktionalität zu deaktivieren;
- Überwachung (306) der Batterieladestände der ersten intelligenten Flüssigkeitszähler und entsprechendes Neubewerten (307) der Konfiguration des zweiten Kommunikationsnetzwerks mit großer Reichweite über Funk (102).

17. Automatisiertes Verwaltungssystem zum Sammeln der Ablesungen von Zählerständen, die von intelligenten Flüssigkeitszählern des Systems erfasst werden, wobei das System außerdem ein Informationssystem und ein Gateway nach Anspruch 16 umfasst.

## Claims

1. Method for configuring a communication network by a gateway (120a) acting as an intermediary between a plurality of smart fluid meters (140a, 140b, 140c, 140d, 140e, 140f) and an information system (110) responsible for collecting metering index readings made by said smart fluid meters (140a, 140b, 140c, 140d, 140e, 140f), the gateway (120a) being connected to the information system (110) by a first communication network (101), the gateway (120a) being connected to first smart fluid meters (140a, 140b, 140f) among said plurality by means of a second long-range radio communication network (102), said first smart fluid meters (140a, 140b, 140f) being able to act as relays for second smart fluid meters (140c, 140d, 140e) by means of a third short-range radio communication network (103), wherein the gateway (120a) performs the following steps:
- obtaining (301), via the second long-range radio communication network (102), battery charge levels of the first smart fluid meters (140a, 140b, 140f);
- selecting (303) one or more first smart fluid meters (140f) as relays (130), according to the battery charge levels obtained, favouring the first smart fluid meters the battery charge level of which is the highest;
- configuring (304) the second long-range radio communication network (102), instructing the first smart fluid meters selected as relays (130, 140f) to activate their relay functionality and instructing any former relays that have not once again been selected as relays to deactivate their relay functionality;
- monitoring (306) the battery charge levels of the first smart fluid meters (140a, 140b, 140f) and re-evaluating (307) the configuration of the second long-range radio communication network (102) accordingly.

2. Method according to claim 1, wherein the gateway (120a) selects (303) as relay (130) each first smart fluid meter the battery charge level of which is higher than a first predetermined threshold.

3. Method according to claim 1 or 2, wherein the gateway (120a) performs the following steps:
- making (302), during exchanges with the first smart fluid meters via the second long-range radio communication network, measurements of reception quality of signals coming from the first smart fluid meters;
- selecting (303) one or more first smart fluid meters (140f) as relays (130), according furthermore to the measurements of reception quality of signals made, favouring the first smart fluid meters for which the signal reception quality is the highest;
- monitoring (306) the reception quality of signals transmitted by the first smart fluid meters in the second long-range radio communication network (102), and re-evaluating (307) the configuration of the second long-range radio communication network (102) accordingly.

4. Method according to claim 3, wherein the gateway (120a) selects (303) as relays (130) each first smart fluid meter for which the quality of reception of signals by the gateway is above a second predetermined threshold.

5. Method according to any one of claims 1 to 4, wherein the second smart fluid meters (140c, 140d, 140e) are paired with the first smart fluid meters (140f) acting as relays (130) for said second smart fluid meters (140c, 140d, 140e), performing the following steps:
- each second smart fluid meter (140c, 140d, 140e), in a pairing mode, sends (403, 407) announcement frames until a response is received from a first smart fluid meter acting as relay (130);
- each first smart fluid meter acting as relay (130) in pairing mode and within radio range of the third short-range radio communication network (103) responds (410) to at least one announcement frame received and pairs with the second smart fluid meter (140c, 140d, 140e) that sent the announcement frame responded to.

6. Method according to claim 5, wherein at least a said second smart fluid meter (140a, 140d, 140e) switches (402) into pairing mode when a triggering of metering is detected (401) for the very first time.

7. Method according to claim 5 or 6, wherein at least one said second smart fluid meter (140c, 140d, 140e) switches (402) into pairing mode following a loss of synchronisation with a previous relay.

8. Method according to any one of claims 5 to 7, wherein a said relay (130) switches (406) into pairing mode when a pressing on a man-machine interface button of the relay (130) in question is detected (405a) or when specific instructions are received via an infrared connector of the relay (130) in question.

9. Method according to claim 8, wherein the detection (405a) of a pressing on the interface button during a period lying between a minimum bound and a maximum bound instructs the relay (130) in question to switch into pairing mode so as to enable a single second smart fluid meter to pair, and the detection (405a) of a pressing on the interface button during a period greater than the maximum bound instructs the first smart fluid meter in question to switch to pairing mode during a predetermined period.

10. Method according to any one of claims 5 to 9, wherein a said relay (130) switches to pairing mode when instructions (405b) are received from the gateway (120a) to activate or to maintain the relay functionality.

11. Method according to any one of claims 1 to 10, wherein each relay (130) collects (505, 506), via the third short-range radio communication network (103), the battery charge level of each second smart fluid meter (140c, 140d, 140e) that is paired with it and informs the gateway (120a) of this, the gateway (120a) alerting (602) the information system (110) when the battery charge level of a smart fluid meter is below a predetermined alert threshold.

12. Method according to any one of claims 1 to 11, wherein, when a first smart fluid meter that acted as a relay and is no longer one detects that at least one second smart fluid meter is isolated and is no longer paired, the first smart fluid meter automatically reactivates its relay functionality, enables each second smart fluid meter in question to make a pairing and warns the gateway (120a) that it is once again acting as a relay.

13. Method according to any one of claims 1 to 12, wherein, when a relay (130) loses its connection with the gateway (120a) via the second long-range radio communication network (102), the relay (130) in question automatically deactivates the relay functionality, resumes its simple role of a smart fluid meter (140f), and itself seeks to be paired with another relay.

14. Computer program product comprising instructions for implementing the method according to any one of claims 1 to 4, when said instructions are implemented by a processor.

15. Information storage medium storing instructions for implementing the method according to any one of claims 1 to 4, when said instructions are read from the information storage medium and implemented by a processor

16. Gateway (120a), configured for acting as an intermediary between a plurality of smart fluid meters (140a, 140b, 140c, 140d, 140e, 140f) and an information system (110) responsible for collecting metering index readings made by said smart fluid meters (140a, 140b, 140c, 140d, 140e, 140f), the gateway (120a) being configured for being connected to the information system (110) by a first communication network (101) and for being connected to first smart fluid meters (140a, 140b, 140f) among said plurality by means of a second long-range radio communication network (102), said first smart fluid meters (140a, 140b, 140f) being able to act as relays for second smart fluid meters in said plurality by means of a third short-range radio communication network(103), the gateway (120a) comprising electronic circuitry configured for:
- obtaining (301), via the second long-range radio communication network (102), battery charge levels of the first smart fluid meters (140a, 140b, 140f);
- selecting (303) one or more first smart fluid meters as relays (130), according to the battery charge levels obtained, favouring the first smart fluid meters the battery charge level of which is the highest;
- configuring (304) the second long-range radio communication network (102), instructing the first smart fluid meters selected as relays (130) to activate their relay functionality and instructing any former relays that have not once again been selected as relays to deactivate their relay functionality;
- monitoring (306) the battery charge levels of the first smart fluid meters and re-evaluating (307) the configuration of the second long-range radio communication network (102) accordingly.

17. Automated management system for collecting metering index readings made by smart fluid meters in said system, the system further comprising an information system and a gateway according to claim 16.
